# EUROPEAN PATENT APPLICATION

(11) **EP 4 764 601 A1**
(43) Date of publication of application: **24.06.2026**
(21) Application number: 25225599.7
(22) Date of filing: 19.12.2025
(51) Int. Cl.: G01S 7/481, E03C 1/04, E03C 1/05, E03D 5/10, G01S 17/42, G01S 17/88, G06F 3/042, G06F 3/0488

(54) **CONTROL SYSTEM INCLUDING AN OPTICAL SENSOR**

(30) Priority: 20.12.2024 GB 202418857
(71) Applicant: Kohler Mira Limited, Cheltenham, Gloucestershire GL52 5EP (GB)
(72) Inventor: LEA, Ben, Cheltenham, Gloucestershire GL52 5EP (GB); BURNS, Richard, Cheltenham, Gloucestershire GL52 5EP (GB); BLENKARN, Dan, Cheltenham, Gloucestershire GL52 5EP (GB); BEAZER, Jack, Cheltenham, Gloucestershire GL52 5EP (GB); KERING, Jeffery, Cheltenham, Gloucestershire GL52 5EP (GB)
(74) Representative: Gill Jennings & Every LLP

(57) **Abstract**

A control system, comprising: an optical sensor configured to: define at least one sensing region within a two-dimensional plane, detect an object intersecting the two-dimensional plane in the at least one sensing region and determine a location of the object within the at least one sensing region, and transmit an output signal upon detection of the object, wherein the output signal is based on the determined location of the object; a controller configured to receive the output signal from the optical sensor and to transmit a control signal based on the received output signal; and a digital valve configured to receive the control signal from the controller and to operate in response said received control signal.

## Description

### FIELD OF THE INVENTION

The present disclosure relates to a control system including an optical sensor. The control system may be used to control electronic or digital devices. In particular, the control system may be used for a shower or faucet, for example.

### BACKGROUND

Valves are integral components in kitchen or bathroom environments and may be used to control properties of water flow, such as temperature, pressure, or flow rate. Traditionally, these valves have been controlled with analogue control mechanisms such as levers, nobs, or handles which are manually turned to open or close valves and adjust the desired water properties. While these mechanisms are straightforward and widely used, they present several challenges.

One drawback of analogue control systems is their usability for individuals with limited mobility. The motor skills required to manipulate levers or knobs can make such systems inaccessible to users with disabilities or reduced dexterity. Additionally, these mechanical controls often introduce surface crevices that can accumulate dirt, water deposits, and other contaminants which may provide favourable conditions for the growth of limescale, mould, or bacteria. In this way, traditional analogue control mechanisms may compromise hygiene in kitchen or bathroom environments, areas where cleanliness is particularly crucial.

Digital valves have therefore been developed that remove the requirement of a user to manipulate associated levers and knobs to control such valves. Traditional digital control means, such as capacitive, resistive or inductive touch sensors may be easier to operate than analogue control mechanisms for users with reduced mobility. However, in wet environments like kitchens and bathrooms, touch-based digital controls can experience false triggers or failures due to water contact, leading unreliable operation.

Attempts to address these problems include the use of touchless, sensor-activated valves, such as those found in gesture-activated (e.g. wave-activated) faucets. These touchless systems rely on proximity or motion sensors to turn water flow on and off, without physical contact. While touchless faucets offer improved hygiene and ease of use, their functionality is typically limited to basic on/off control, without the ability to adjust temperature, flow rate, or other properties.

Additionally, users may associate digital control systems, such as wave-activated faucets, with commercial environments which can make them less appealing for residential use. In their homes or other residential settings, users may prefer control mechanisms that offer a more familiar, intuitive and personalised experience.

Therefore, a need remains for an improved system of controlling digital valves, which addresses the accessibility and hygiene concerns inherent in analogue mechanisms and offers user-friendly operation and precise control over water properties which traditional digital control mechanisms lack. Such an improved control system may also be used to control other electronic devices.

### BRIEF DESCRIPTION OF DRAWINGS

Examples of the control system being disclosed will now be described, purely by way of example, with reference to the accompanying drawings, in which:
Figure 1A shows a schematic of a system for controlling a digital valve including an optical sensor, a controller, and a digital valve;
Figure 1B shows a schematic of an optical sensor;
Figure 2A shows an isometric view of a shower enclosure including a control system having an optical sensor;
Figure 2B shows the shower enclosure of Figure 2A with the sensing region of the optical sensor outlined;
Figure 2C shows a cut-away view of the shower enclosure, revealing components of the control system within the frame of the shower enclosure;
Figure 2D shows an exploded view of the components of the control system within the frame of the shower enclosure;
Figure 3A shows a schematic of a system for controlling an electronic device including an optical sensor and a controller;
Figure 3B shows an isometric view of a housing for an optical sensor;
Figure 3C shows an exploded view of the housing of Figure 3B;
Figure 3D shows the housing of Figure 3B having an optical sensor configured to detect the presence of the interchangeable member within the slot;
Figure 4 shows a diagram of an example optical sensor illustrating a method by which the optical sensor may detect an object within a sensing region;
Figure 5 shows another diagram of an optical sensor;
Figure 6A shows a schematic of a shower system including a digital valve;
Figure 6B shows an isometric view of a digital valve;
Figure 6C shows an exploded view of the digital valve of Figure 6B;
Figure 7A depicts a toilet cistern having a control system including an optical sensor;
Figure 7B depicts a mirror having a control system including an optical sensor;
Figure 8A depicts a sink having a control system including an optical sensor where the sensing region of the optical sensor is defined across the surface of a cabinet; and
Figure 8B depicts a bathroom environment having control systems including optical sensors where the sensing regions of the optical sensors are defined across the floor and across walls.

### DETAILED DESCRIPTION

Disclosed herein is a control system including an optical sensor. The optical sensor is configured to define at least one sensing region within a two-dimensional plane, detect an object intersecting the two-dimensional plane in the at least one sensing region and determine a location of the object within the at least one sensing region, and transmit an output signal upon detection of the object, wherein the output signal is based on the determined location of the object. The control system further includes a controller configured to receive the output signal from the optical sensor and to transmit a control signal based on the received output signal. The control system further includes a digital valve configured to receive the control signal from the controller and to operate in response said received control signal.

The optical sensor may be configured to be orientated adjacent a substantially planar surface such that the two-dimensional plane of the at least one sensing region is defined substantially parallel to the substantially planar surface. The optical sensor may be configured to be mounted to a substantially planar surface such that the at least one sensing region can be defined across the planar surface.

The at least one sensing region may include a plurality of sensing sub-regions, each sensing sub-region corresponding to a different output signal that is transmitted upon detection of an object therein. Each sensing sub-region may be configured to align with an icon indicated on the substantially planar surface. Each icon may be indicative of a predetermined control signal that will be output by the controller to the digital valve upon detection of an object intersecting the two-dimensional plane in that sub-region.

The optical sensor may be further configured to detect one or more movements of the object while intersecting the two-dimensional plane within the sensing region. Different sequences of movements may correspond to different output signals. The optical sensor may be located remotely from the digital valve.

The optical sensor may be housed within a frame of a shower enclosure and oriented such that the sensing region is defined substantially parallel to a substantially planar surface of the shower enclosure. The digital valve may be operably coupled to a shower fixture within the shower enclosure and configured to control at least one of a temperature or a flow rate of fluid ejected from a shower head of the shower fixture. The digital valve may be operably coupled to at least one of: a toilet, a shower fixture and a faucet.

The optical sensor may be disposed inside a housing having at least one aperture in alignment with the optical sensor to allow the sensing region to be defined externally of the housing. The housing may be configured to receive an interchangeable member having at least one substantially planar surface such that the at least one sensing region is defined across said substantially planar surface.

Also disclosed herein is a shower system, comprising a shower enclosure including a frame and one or more (e.g. glass) walls (or panels, one of which may be configured to act as a door) supported by the frame; a shower fixture having a shower head located within the shower enclosure; and a control system as described above. The optical sensor of the control system may be housed within the frame of the shower enclosure and oriented adjacent a substantially planar surface of the shower enclosure such that the at least one sensing region is defined substantially parallel to said substantially planar surface. The substantially planar surface of the shower enclosure may be a wall of the shower enclosure, such that the at least one sensing region is defined across a portion of the wall. The digital valve of the control system may be operably coupled to the shower fixture and configured to control at least one of a temperature or a flow rate of fluid ejected from the shower head of the shower fixture.

Also disclosed herein is a system for controlling a digital (e.g. electronic) device. The system includes an optical sensor configured to define at least one sensing region within a two-dimensional plane, detect an object intersecting the two-dimensional plane in the at least one sensing region and determine a location of the object within the at least one sensing region, and transmit an output signal upon detection of the object, wherein the output signal is based on the determined location of the object. The system further includes a controller configured to receive the output signal from the optical sensor and to transmit a control signal based on the received output signal. The optical sensor is disposed inside a housing having at least one aperture in alignment with the optical sensor to allow the at least one sensing region to be defined externally of the housing. The housing is configured to receive an interchangeable member having at least one substantially planar surface such that the at least one sensing region is defined across said substantially planar surface.

The housing disclosed herein may include a slot configured to receive the interchangeable member therein. The optical sensor may be configured to detect the presence of the interchangeable member within the slot. The housing may be configured as a standalone docking station.

The controller disclosed herein may be disposed within the housing. The controller may be configured for wireless communication.

The optical sensor disclosed herein may include an infrared (IR) sensor. The optical sensor may include a plurality of emitters configured to emit an outgoing light signal along the two-dimensional plane. The optical sensor may further include a plurality of detectors configured to receive a reflected light signal. The reflected light signal may include light from the outgoing light signal reflected by an object intersecting the two-dimensional plane within the at least one sensing region. The sensor may be configured to determine, based on an angle of incidence of the reflected light signal on one of the plurality of light detectors, a location of the object in the sensing region. The optical sensor may be configured to transmit output signals only upon detection of an object intersecting the two-dimensional plane in the at least one sensing region. The emitters of the optical sensor according to the first or second aspect may be arranged to emit light across the two-dimensional plane.

The control systems mentioned above will now be described in further detail, with reference to the drawings. Much of the following description relates to the control of a digital valve. However, it will be appreciated that the control systems disclosed herein may equally be applied to any other electronic or digital device and certain examples, in addition to a digital valve, are described throughout.

Furthermore, it will be understood by a skilled person that any apparatus or system feature described herein may be provided as a method feature, and vice versa. It will also be understood that particular combinations of the various features described and defined in any aspects described herein can be implemented and/or supplied and/or used independently.

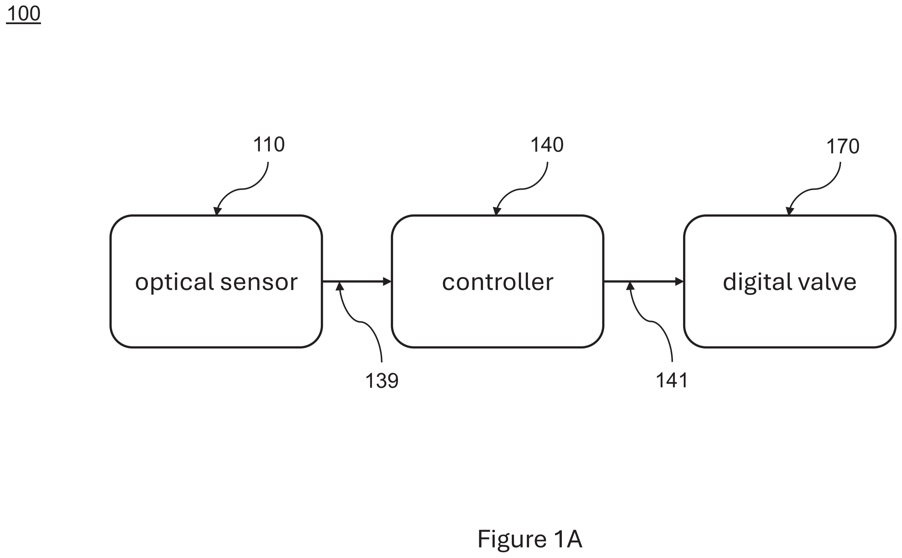

Figure 1A shows a schematic of an exemplary control system 100 including an optical sensor 110, a controller 140 and a digital valve 170.

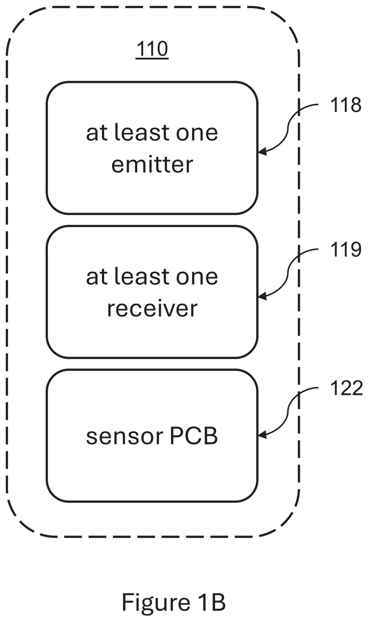

Referring now to Figure 1B, the optical sensor 110 includes at least one emitter 118 configured to emit a light signal 404 and at least one receiver 119 configured to receive a reflected light signal 406. The optical sensor 110 further includes electronics (not shown) configured to transmit output signals 139, which are based on the reflected light signal(s) 406 received by the at least one receiver 119. For example, the optical sensor 110 may include a sensor printed circuit board (PCB) 122.

The optical sensor 110 defines at least one sensing region 112 that lies within a two-dimensional plane. The optical sensor 110 is configured to detect an object 402 intersecting a two-dimensional plane in the at least one sensing region 112. The optical sensor 110 determines a location of an intersecting object 402 within the at least one sensing region 112. In determining the location of an intersecting object 402, the optical sensor 110 can determine both a lateral position (e.g. a x-coordinate) and a longitudinal position (e.g. a y-coordinate) of the object 402.

The sensing region 112 can be configured to have predefined boundaries. In this way, the optical sensor 110 can be configured to define a limited ('active') sensing region 112 such that objects intersecting the same two-dimensional plane outside of the 'active' sensing region 112 will not actuate the optical sensor 110.

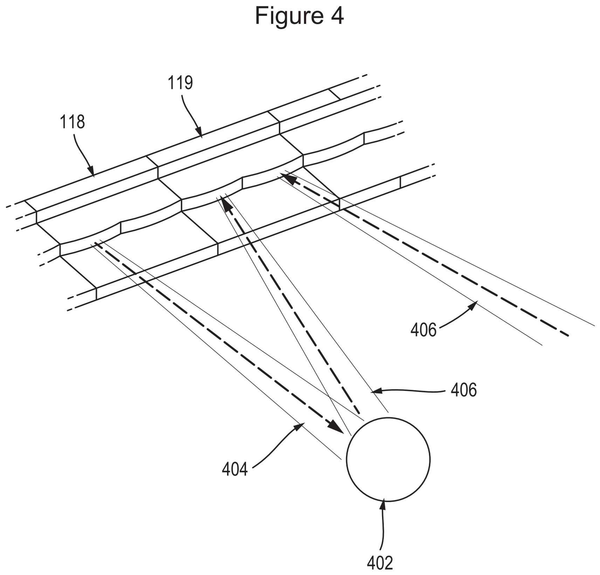

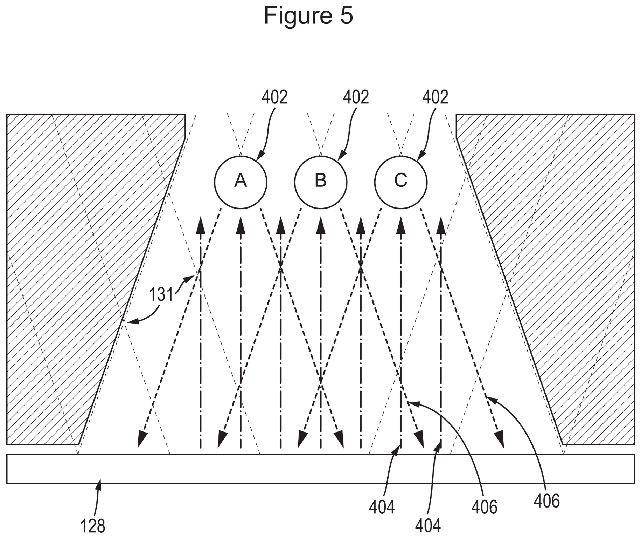

The optical sensor 110 detects an object 402 intersecting the two-dimensional plane within the sensing region 112 by emitting one or more light signals 404 from an emitter 118 into that sensing region 112, along the two-dimensional plane of the sensing region 112. Said light signal(s) 404 are reflected by an object 402 intersecting with the sensing region 112. The reflected light signal 406 returns to the optical sensor 110 and is received by at least one receiver 119. Further details regarding the optical sensor 110 will be discussed in connection with Figures 4 and 5.

A user may interact with the optical sensor 110 to indicate a desired control setting by intersecting an object 402 (e.g. a user's hand or a stylus) with the sensing region 112 at a particular location in the sensing region 112. Additionally, or alternatively, a user may indicate a desired control setting by intersecting an object 402 (e.g. a user's hand) with the sensing region 112 and moving said object 402 in a particular way (e.g. making a 'swipe' gesture).

Upon detecting an object 402 in the sensing region 112, the optical sensor 110 transmits one or more output signals 139, which are based on a determined location of the object 402. Additionally, or alternatively, the output signal(s) 139 may be based on a determined movement of the object 402 within the sensing region 112.

The system 100 further includes a controller 140 configured to receive the output signal(s) 139 from the optical sensor 110. The controller 140 may be provided together with, or in close proximity to, the optical sensor 110. Alternatively, the controller 140 may be located remotely from the optical sensor 110. The controller 140 may communicate with the optical sensor 110 via one or more wired connections. Additionally, or alternatively the controller 140 may be configured to communicate wirelessly with the optical sensor 140 (for example, the controller 140 and optical sensor 110 may be configured for communication via WiFi).

The controller 140 may include a signal processor configured to enable the controller 140 to receive electronic signals (e.g. output signals 139) from the optical sensor 110. The controller 140 may be further configured to process data by way of said signal processor, such as optical sensing data received from the optical sensor 110 by way of the output signals 139. The controller 140 may be further configured to transmit (output) a control signal 141, based on a received output signal 139. The transmitted control signal 141 may include commands configured to control drive mechanisms, such as (valve or flow regulator) actuators or other actuatable components of the system 100 (e.g. to open or close a valve or flow regulator thereby to control a flow of fluid).

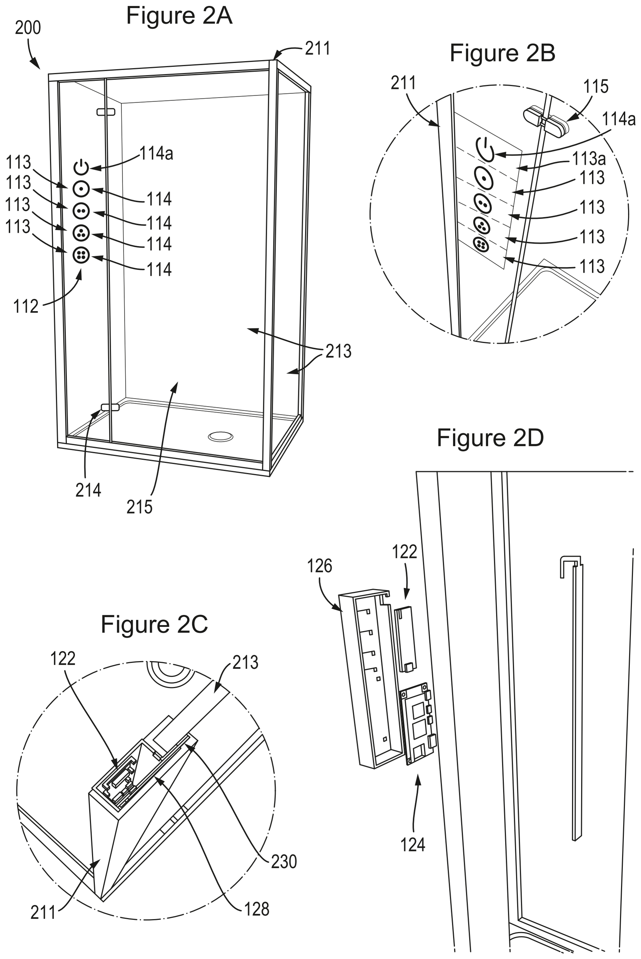

The controller 140 may be a control PCB 124, as shown in Figure 2. However, it will be appreciated that the controller 140 may be provided as any other suitable component such as a programmable logic controller (PLC), microprocessor, or microcontroller.

The control signal 141 is configured to correspond to a desired control setting indicated by the user. The controller 140 may transmit said control signal 141 to a digital valve 170 or an alternative electronic device 370. In some examples, the specific electronic device 370 the control signal 141 is transmitted to may be determined based on the received output signal 139 which the control signal 141 is based on. In this way, a single optical sensor 110 may communicate with more than one electronic device 370 and a user may select which device the optical sensor 110 controls.

The digital valve 170 (or other electronic device 370) which receives the control signal 141 operates in response to the received control signal 141. An operation or function performed by said valve 170 or other device 370 can therefore correspond to the desired control setting indicated by the user.

Figure 2A shows an isometric view of a shower enclosure 200 including an exemplar control system 100 for controlling a digital valve 170

The shower enclosure 200 includes a shower fixture 201 (not shown) operably coupled to a digital valve 170 (not shown), which is configured to control at least one of a temperature or a flow rate of fluid (e.g. water) ejected from a shower head 202 (not shown) of the shower fixture 201.

In the system 100 shown in Figure 2A, the optical sensor 110 has an elongate configuration such that the optical sensor 110 can define a two-dimensional sensing region 112 (i.e. a sensing region 112 which lies within a two-dimensional plane). Other configurations of the sensor 110 may be possible.

The optical sensor 110 of Figure 2A lies in the plane of the sensing region 112. However, it will be appreciated that this may not necessarily be the case in all systems as the optical sensor 110 may alternatively define a sensing region 112 lying in a two-dimensional plane which is not adjacent the optical sensor 110.

The optical sensor 110 may have a length configured to provide a sensing region 112 of a desired size. For example, the optical sensor 110 may have a length of between 10 mm to 3000 mm, preferably a length of between 50 mm and 2000 mm, and more preferably a length of between 50 mm and 450 mm. For example, the optical sensor 110 may have a length of around 200 mm.

Accordingly, the sensing region 112 defined by the optical sensor 110 may have a corresponding length (or width / height, depending on how the sensor 110 is orientated and the sensing region viewed) of between 10 mm to 3000 mm, preferably a length of between 50 mm and 2000 mm, and more preferably a length of between 50 mm to 450 mm. For example, the length / width / height of the sensing region 112 may be around 200 mm. Another dimension of the sensing region 112 (i.e. a "depth" dimension in a direction perpendicular to the elongate optical sensor 110) may be, for example, between 10 mm to 3000 mm, preferably a length of between 50 mm and 2000 mm, and more preferably a length of between 50 mm and 450 mm. For example, a depth of the sensing region 112 may be around 200 mm.

The shower enclosure 200 includes a frame 211 and one or more walls 213 (or panels) supported by the frame 211. In some embodiments, one of the walls 213 has (or is configured as) a door 214 which is moveable by way of hinges 215 to allow access into and out of the shower enclosure 200. In other embodiments, the shower enclosure 200 may include an open (or at least partially open) side (wall) to allow access into and out of the shower enclosure 200. The shower enclosure may be defined at least in part by one or more (e.g. tiled) surface of the room (e.g. bathroom) in which the shower enclosure 200 is located.

The optical sensor 110 may be housed within the frame 211 of the shower enclosure 200. The frame 211 of the shower enclosure 200 may also be referred to as the "extrusion" of the shower enclosure 200. The optical sensor 110 is arranged to be orientated adjacent the substantially planar surface of the room or wall 213 of the shower enclosure such that the sensing region 112 is defined substantially parallel to (i.e. 'across') the wall 213 of the shower enclosure 200.

It will be appreciated that any substantially planar surface would also be suitable for defining a sensing region 112. For example, the sensing region 112 might be defined across a planar portion of the frame 211 of the shower enclosure 200 or across a wall or any other surface (not shown) adjacent the shower enclosure 200. In these examples, the optical sensor 110 maybe concealed within the frame 211 or mounted externally to the frame 211 or another surface.

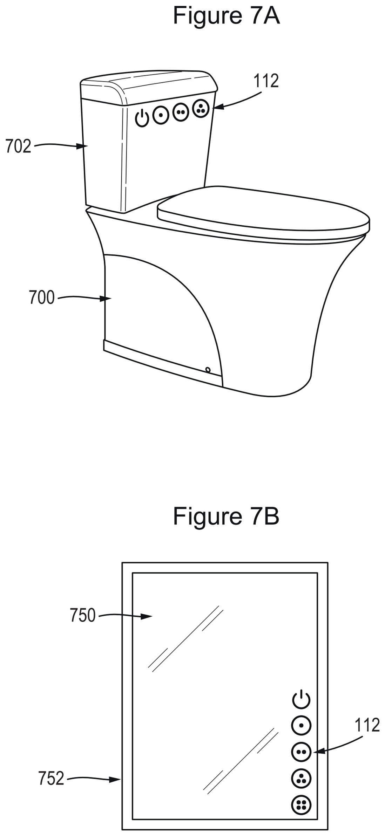

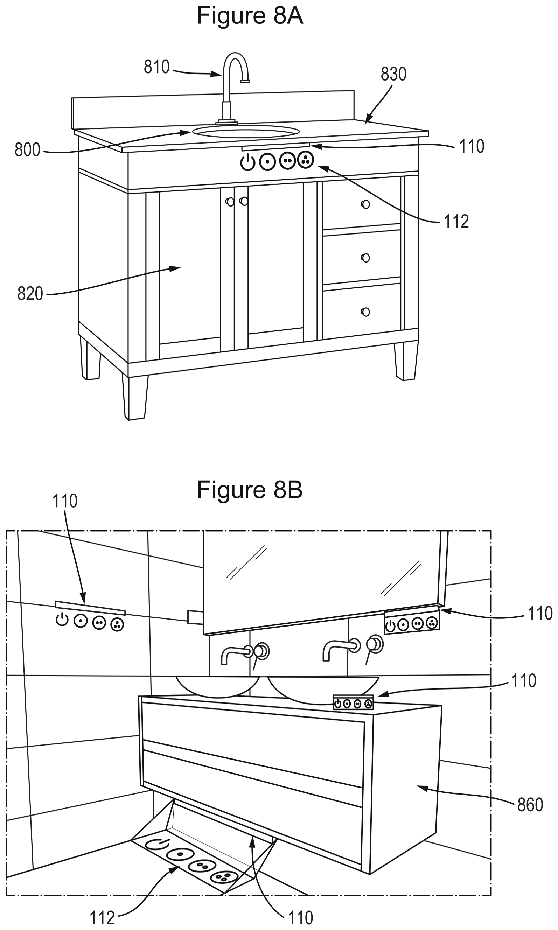

Thus, in some embodiments, the optical sensor may be housed within the frame 211 of the shower enclosure 200 and oriented adjacent a substantially planar surface of the shower enclosure 200 such that the at least one sensing region 112 is defined substantially parallel to said substantially planar surface. As noted above, the planar surface may, for example, be a wall (or panel) 213 of the shower enclosure 200, a portion of the frame 211 or a surface of a room adapted (or utilised) to form part of the shower enclosure 200. Certain other examples of suitable planar surfaces to which an optical sensor 110 may be mounted are depicted in Figures 7 and 8, and will be discussed later on.

The optical sensor 110 may be arranged adjacent a surface which has a fixed orientation with respect to the optical sensor 110. Therefore, in the system 100 shown in Figure 2A, the hinges 215 may be spaced from the frame 211 such that the sensing region 112 may be defined across a portion of the wall 213 which is not moveable (i.e. such that the sensing region 112 is not defined across the door 214).

Figure 2B shows an enlarged view of the sensing region 112 and, as depicted therein, the sensing region 112 includes a plurality of sensing sub-regions 113. Each sensing sub-region 113 may correspond to a different output signal 139 such that detection of an object 402 within a given sub-region 113 (e.g. detection of a user's hand) will cause an output signal 139 which corresponds to that sub-region 113 to be transmitted from the optical sensor 110 to the controller 140.

The sensing sub-regions 113 of Figures 2A and 2B are each configured to align with an icon 114 indicated on the planar surface of the shower wall 213. The icons 114 may be etched, printed onto, or otherwise indicated on the shower wall 213. Additionally, or alternatively, the icons 114 may be provided as stickers that are applied to the wall 213.

The icons 114 may each be indicative of a predetermined control signal 141 that the controller 140 is configured to output to a digital valve 170 (or other devices 370) upon detection of an object 402 intersecting the two-dimensional plane of the sensing region 112 within a given sub-region 113 corresponding to a given icon 114.

For example, the 'power' icon 114a may correspond to an on/off output signal 139a such that, when a user touches the icon 114a with their finger (or any other object 402), that finger or object 402 will intersect with the sensing region 112 in the sub-region 113a corresponding to the power icon 114a. Accordingly, the optical sensor 110 will transmit a (corresponding) on/off output signal 139a to the controller 140. The controller will thus transmit a corresponding control signal 141a to a digital valve 170 causing the digital valve 170 to turn on or off a flow of water from the shower head 202 (not shown) of the shower enclosure 200 which is in fluid communication with and operably coupled to said digital valve 170.

It will be appreciated that the sensing region 112 may be defined across a planar surface and spaced from that surface such that a user does not need to touch the planar surface in order to intersect their hand or finger with the sensing region 112. For example, in the system 100 shown in Figure 2A, the sensing region 112 may be horizontally spaced from the wall 213 of the shower enclosure such that a user needs only bring their finger or another object close to the icon 114a in order to actuate that icon 114a, rather than needing to physically touch the icon 114a. In some examples, the sensing region 112 may be spaced from a planar surface (such as the shower wall 213) by a gap of between 1 mm and 100 mm.

Advantageously, this arrangement may promote hygiene by allowing users to interact with the optical sensor 110 without having to touch a surface. Such an arrangement may be particularly desirable in medial or assisted-living settings.

However, the provision of the icons 114 may nevertheless mimic a physical (e.g. mechanical) button and users may prefer to physically touch the buttons as this arrangement may be more familiar and intuitive. Icons 114 may be etched or carved into a surface (or otherwise include a tactile feature or element). Such a tactile feature may make the control system 100 feel more analogue and familiar and may be advantageous for users with impaired vision.

Additionally, or alternatively the optical sensor 110 may be configured to detect one or more movements of an object 402 (e.g. a user's hand) while that object 402 is intersecting the two-dimensional plane of the sensing region 112. For example, the optical sensor 110 may be configured to detect a 'swipe' or 'pinch' action of the user.

Different movements (or sequences of movements) of an object 402 within the sensing region 112 may correspond to different, predetermined output signals 139. The optical sensor 110 may be configured to respond to such (sequences of) movements only within certain, pre-defined subregions 113. A given sub-region 113 may align with an icon 114 which is indicative of the movement(s) that sub-region 113 is corresponds to.

For example, an icon 114 may depict a 'slide bar' (not shown in Figure 2) which indicates that the sub-region 113 in alignment with that slide bar icon 114b is preconfigured to correspond to a 'swipe' motion. For example, a user swiping up (or, indeed, left or right) may correspond to an output signal 139 which causes a temperature or pressure of a water flow from the shower head 202 to increase and a user swiping down may correspond to an output signal 139 which causes a temperature or pressure of a water flow from the shower head 202 to decrease.

Figure 2C shows a cut-away view of the shower enclosure 200 of Figure 2A, revealing certain components of the system 100 which are concealed within the frame 211 (extrusion) of the shower enclosure 200. Figure 2D shows an exploded view of the components of said system 100.

The control system 100 may include electronics in the form of a sensor PCB 122. The sensor PCB 122 may form a part of the optical sensor 110 (as shown in Figure 1B). The system 100 may include a controller 140 in the form of the control PCB 124. It will be appreciated that where features or functions of the sensor PCB 122 and control PCB 124 are described, these features or functions may be equally applicable to any other suitable electronics or the controller 140.

The sensor PCB 122 and the control PCB 124 may be housed together within the electronics housing 126 which may be installed within the frame 211 of the shower. Additionally, or alternatively, the sensor PCB 122 and the control PCB 124 may be installed directly into (and thus housed by) the shower frame 211. The control PCB 124 may be arranged together with the sensor PCB 122 (e.g. they may be located together in the electronics housing 126) or they may be located remotely from each other and configured to communicate, for example wirelessly.

The optical sensor 110 shown includes a sensor bar 128 having a plurality of emitters 118 and receivers 119. The emitters 118 are configured to emit light 404 across the sensing region 112 and the receivers 119 are configured to receive and detect reflected light 406, which has been emitted by the emitters 118 and reflected by an object 402 intersecting with sensing region 112. The sensor bar 128 may be an infrared (IR) sensor.

The emitters 118 and the receivers 119 may be housed within the electronics housing 126 of the optical sensor 110. Alternatively, the emitters 118 and the receivers 119 may be located externally from the electronics housing 126.

When the optical sensor 110 is concealed, it may be disposed inside a housing (such as the electronics housing 126) having at least one aperture 230 in alignment with the optical sensor 110 to allow light from the emitters 118 to leave and re-enter said housing. Specifically, the at least one aperture 230 should be configured to align with emitters 118 and receivers 119 of the optical sensor 110. Providing an aperture 230 in a housing of the optical sensor 110 thus allows the sensing region 112 to be defined externally of the housing. This is illustrated in Figure 2C, where the frame 211 of the shower enclosure 200 includes an aperture 230, and the sensing region 112 is defined externally from this frame 211 (see Figure 2A) via said aperture 230.

The at least one aperture 230 shown is configured as an elongate aperture. The aperture 230 may include a lens or other cover (not shown) configured to allow the passage of light signals through said lens or cover but not to allow the passage of water. Advantageously, this may substantially seal the components of the optical sensor 110 from wet kitchen and bathroom environments.

In systems 100 where the emitters 118 and the receivers 119 are housed within the electronics housing 126, an aperture 230 may be provided in the electronics housing 126 in alignment with the emitters 118 and receivers 119. Additionally, or alternatively, an aperture 230 may be provided in the frame 211 of the shower enclosure 200, as depicted in Figure 2C.

Figures 2A to 2D depict a shower enclosure 200 having only a single optical sensor 110. However, it will be appreciated that the system 100 may include more than one optical sensor 110. Additionally, or alternatively, the optical sensor 110 may include more than one sensor bars 128. The multiple optical sensors 110 (and/or multiple sensor bars 128) may share a sensor PCB 122, or each be associated with their own sensor PCB 122. The multiple optical sensors 110 (and/or multiple sensor bars 128) may communicate with a single controller 140 (e.g. the control PCB 124), or the system 100 may include multiple controllers 140.

For example, the frame 211 of the shower enclosure 200 might include a second sensor bar 129 (not shown) which is disposed within the frame 211 opposite the first sensor bar 128. The second sensor bar 129 may define a second sensing region 130 (not shown) across an interior side of the wall 213 (i.e. inside the shower enclosure 200). The first sensing region 112 is defined on an exterior side of the wall 213 and may oppose the second sensing region 130. Advantageously, this may allow a digital valve 170 to be conveniently controlled by the control system 100 from both inside and outside the shower enclosure 200.

In this example, the sub-regions 123 (not shown) of the second sensing region 130 may correspond to the sub-regions 113 of the first sensing region 112, and corresponding sub-regions 113, 123 may oppose each other. In this way, when the wall 213 is formed of glass (or otherwise transparent), a single set of icons 114, visible from each side, may be used to label both sensing regions 112, 130.

In this example, the electronics housing 126 may include a single sensor PCB 122, or two sensor PCBs 122. The electronics housing 126 may also include a single control PCB 124, or two control PCBs 124.

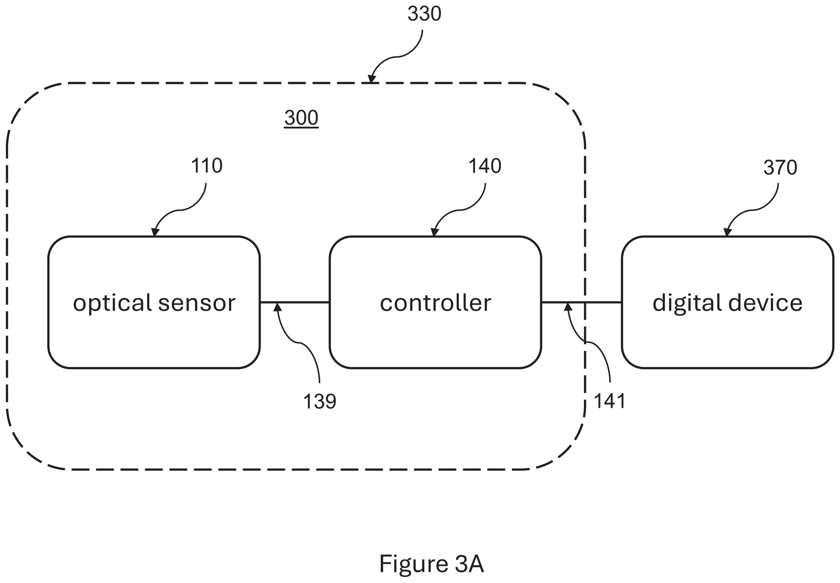

Figures 3A to 3D show an example of a system 300 for controlling a digital device 370. Features of the system 300 which are common to the control system 100 have substantially the same functions and characteristics as described above in connection with the system 100.

Figure 3A shows a schematic of a system 300 which includes an optical sensor 110 and a controller 140. The system 300 is configured to communicate with one or more electronic or digital devices 370. The system 300 may include said one or more electronic or digital devices 370.

The optical sensor 110 and controller 140 may be provided together in a single housing unit 330 (indicated by the dashed line in Figure 3A). Alternatively, the controller 140 may be provided externally from the housing 330 and configured for remote communication with the optical sensor 110.

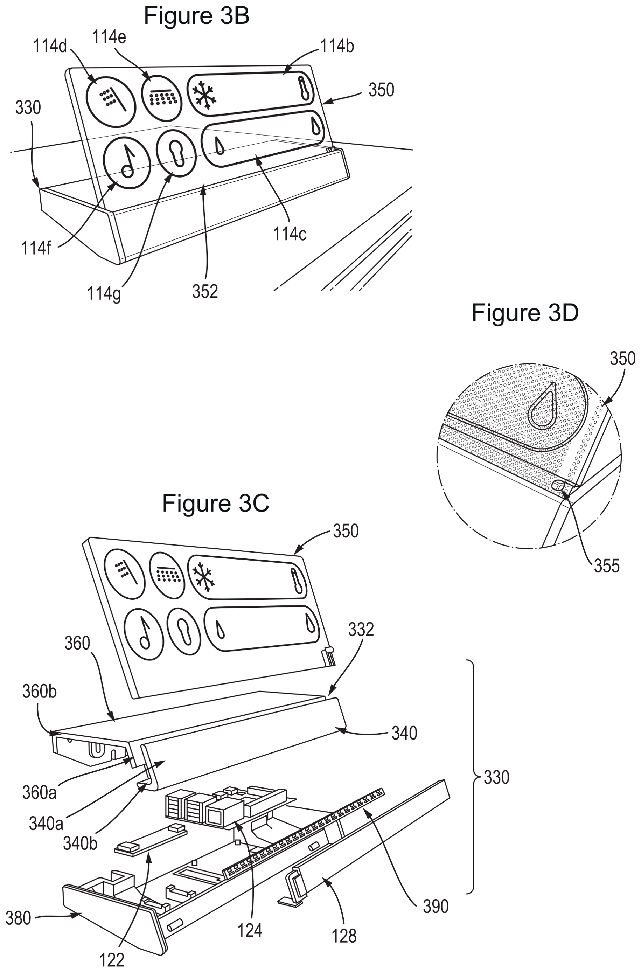

Figure 3B shows an isometric view of a housing 330 for the system 300 where the housing 330 has received an interchangeable member 350 across which the sensing region 112 of the optical sensor 110 may be defined.

The interchangeable member 350 may include at least one substantially planar surface such that the (at least one) sensing region 112 may be defined across said substantially planar surface. However, it will be appreciated that the surface across which the sensing region 112 is defined acts as a guide to a user. Therefore, a non-planar surface may also be used. This may also be true for the system 100 described above in connection with Figure 2.

The housing 330 shown in Figure 3B is analogous to the frame 211 of the arrangement shown in Figure 2A in that it houses an optical sensor 110 but has an aperture 230 to allow the sensing region 112 to be defined externally from the housing 330. The interchangeable member 350 is then analogous to the shower enclosure 200 wall 213 of Figure 2A as it includes a planar surface across which the two-dimensional sensing region 112 may be defined.

The interchangeable member 350 may also be referred to as an (interchangeable) panel or tablet. In some examples, the interchangeable member 350 may be formed of metal, glass, plastic or wood. Additionally, or alternatively, the interchangeable member may include an antibacterial or antimicrobial material, which may be particularly advantageous in kitchen or bathroom environments.

As previously described, in relation to the wall 213 of the shower enclosure 200 example shown Figure 2A, icons 114 may be etched, printed, stuck, or otherwise indicated on the interchangeable member 350. Additionally, or alternatively, icons 114 may also be dynamically displayed on the interchangeable member 350. For example, the interchangeable member 350 may include an electronic display (e.g. an LCD screen) which may depict the icons 114. Additionally, or alternatively, the icons 114 may be projected onto the interchangeable member 350. It will be appreciated that icons 114 may also be dynamically displayed in similar ways in connection with any other examples disclosed herein, such as the arrangement shown in Figure 2A.

Figure 3B also depicts some examples of the previously described slide bar icons (see icons 114b and 114c). These icons may be static, or they may be dynamic and configured to change their display in response to a user action. This will be discussed in more detail in connection with the LED strip 390 of Figure 3C.

As previously mentioned, the electronic device 370 which the controller 140 transmits the control signal 141 to may be determined based on the output signal 139 received from the optical sensor 110 and said output signal 139 may be based on a user selection.

For example, the system 300 (or, indeed, any other control system of the present disclosure) may be configured to communicate with more than one digital valve 170, each having an associated shower head 202 (or one digital valve 170 may control more than one shower head 202). These shower heads 202 may be controllable by selecting, respectively, icon 114d, or icon 114e. Additionally, or alternatively, the systems 100, 300 may be configured to communicate with a smart speaker by way of icon 114f, or with a smart door or cabinet lock by way of icon 114g.

The material of the interchangeable member 350 may be selected, or swapped, according to a user preference or design requirement. A single housing unit 330 may be configured for use with multiple different interchangeable members 350. In this way, the housing 330 may be used a 'docking station' or 'dock' for a set of interchangeable members 350.

Different interchangeable members 350 may each be associated with a different user. Additionally, or alternatively, different interchangeable members 350 may each be associated with a different function or different electronic device 370. As will be discussed in more detail in connection with Figure 3D, the housing 330, or components within the housing 330 may be configured to detect the presence of an interchangeable member 350. The housing 330, or components within the housing 330 may be further configured to recognise and distinguish between different interchangeable members 350.

As shown in Figure 3C, the housing 330 may include a slot 332 which is shaped and sized to receive at least a portion of the interchangeable member 350. The housing 330 and slot 332 are configured such that the opening of the slot 332 faces upwards when the housing 330 is in a preferred orientation for use. Therefore, the interchangeable member 350 may be retained within the slot 332 by gravity (i.e. the interchangeable member 350 'sits' within the slot 332).

Additionally, or alternatively, the slot 332 might include one or more clamping elements (not shown) configured to retain the interchangeable member 350 within the slot 332 in any orientation. This arrangement may be advantageous in examples where the housing 330 is arranged vertically and configured to receive the interchangeable member 350 via a slot 332 on a lateral side of the housing 330, or in examples where the housing 330 is configured to receive the interchangeable member via a slot 332 in an underside of the housing 330 (and thus 'hang' from the housing).

In Figure 3C, the slot 332 is shown as defined between two portions of the housing 330, a front panel 340 and an upper base panel 360. The front panel 340 includes a substantially vertical portion 340a. The substantially vertical portion 340a corresponds to and opposes a substantially vertical lip 360a of the upper base panel 360. The slot 332 is thus defined between the substantially vertical portion 340a of the front panel 340 and the substantially vertical lip 360a of the upper base panel 360.

The substantially vertical portion 340a of the front panel 340 and the substantially vertical lip 360a of the upper base panel 360 may each have a (matching) reverse incline, for example, such that an interchangeable member 350 sitting in the slot 322 is inclined backwards (see Figure 3B).

The front panel 340 may further include a horizontal portion 340b adjoined to the bottom of the vertical portion 340a. The horizontal portion 340b may define a base of the slot 332 such that an interchangeable member sits atop the horizontal portion 340b when it is retained in the slot 332.

The housing 330 may further include a cavity configured to house electronics of the system 300 (e.g. the sensor PCB 122 and control PCB 124).

In Figure 3C, the housing 330 further includes a lower base panel 380. The lower base panel 380 forms the base of the housing 330. The lower base panel 380 can also serve as a support for the PCBs (sensor PCB 122 and control PCB 124). The lower base panel 380 may be configured to receive the upper base panel 360 and define the cavity of the housing therebetween (i.e. between the lower base panel 360 and a substantially horizontal portion 360b of the upper base panel 360). As such, the sensor PCB 122 and control PCB 124 may be supported by the lower base panel 380 and housed within said cavity of the housing 330 between the lower base panel 380 and the upper base panel 360.

Any of the components of the housing 330 (e.g. the upper base panel 360 and lower base panel 380) may be formed by extrusion. Additionally, or alternatively, any component of the housing 330 may be formed by injection moulding; casting; or metal forming, for example. The components of the housing 330 may be configured to fit together via one or more fixing elements (not shown). The fixing elements may include one or more 'snap-fit' elements.

The system 300 may further include a power supply 390 (not shown). The power supply 390 may include a rechargeable battery. The power supply 330 may be housed in the housing 330, together with the optical sensor 110. Therefore, the housing 330 may be portable. Additionally, or alternatively, the system 300 may be configured to receive power from a mains power supply.

The housing 330 may be configured as a 'standalone' docking station which may be portable. Additionally, or alternatively, the housing 330 may be mounted to a surface or a wall. The housing 330 may be removably mounted to a surface or a wall. When mounted to a surface or a wall, the housing 330 may be configured to receive power from an external power supply by way of the mounting arrangement.

The system 300 includes an optical sensor, which may be the optical sensor 110 described above in relation to Figures 1 or 2. The optical sensor 110 may therefore define a sensing region 112 (in the same sense as described above in connection with Figure 2) across an interchangeable member 350, which is held in the slot 332 of the housing 330.

The optical sensor 110 may include a sensor bar 128 having a plurality of emitters 118 and receivers 119. As previously discussed, the sensor bar 128 may have a length of between 10 mm to 3000 mm, preferably a length of between 50 mm and 2000 mm, and more preferably a length of between 50 mm and 450 mm. For example, the sensor bar 128 may have a length of around 200 mm.

The sensor bar 128 is ideally located adjacent the slot 332 such that the sensing region 112 is defined across an interchangeable member 350 which is held in the slot 332. For example, in the system of Figure 3, the sensor bar 128 is located adjacent an inner surface of the vertical portion 340a of the front panel 340 (i.e. the surface of the front panel 340 which faces the slot 332) such that the sensing region 112 is defined across a front face 352 of the interchangeable member 350. In this way, the slot 332 may perform a similar function to the aperture 230 of the arrangement shown in Figure 2C. Alternatively, the housing 330 may include an aperture 230 adjacent the slot 332 (e.g. there may be an aperture 230 in the front panel 340 and the sensor bar 128 may be retained within the front panel 340).

The housing 330 may further include a light source (not shown) configured to illuminate the interchangeable member 350. When the interchangeable member 350 is a transparent material (such as glass), the light source may be located at the bottom of the slot 332, such that the interchangeable member 350 is illuminated from underneath. Additionally, or alternatively, the light source may be configured to illuminate the front face 352 of the interchangeable member 350, for example when the interchangeable member 350 includes an opaque material (such as metal).

The light source may be provided as a strip of LEDs 390. Where functions of the LEDs strip 390 are described, it will be appreciated that any other light source may also provide the same functionality.

The LED strip 390 (or alternative light source) may be configured to provide feedback to user interactions with the optical sensor 110. In some instances, a colour or brightness of the LEDs of the LED strip 390 may correspond to a property selected by a user. For example, a user may select an increased water temperature (by swiping icon 114b or otherwise). In response, the LEDs of the LED strip 390 may increase in brightness or change colour. For example, red may indicate warmer temperatures, and blue may indicate colder temperatures.

The LEDs of the LED strip 590 may also flash or momentarily increase in brightness in response to a user interaction with the optical sensor 110. In this way, a user can be confident that the optical sensor 110 has registered their selection. The housing 330 may further include other feedback components such as a haptic actuator configured to provide haptic feedback.

Additionally, or alternatively, when the icons 114 are dynamically displayed, as previously described, the icons 114 may alter their appearance in response to a user selection. For example, a slide bar icon 114b, 114c may include a dynamic slider icon (not shown) which moves along the slide bar 114b, 114c according to a user actuating said slide bar.

The icons 114, when dynamic, may also change based on user selections. For example, selecting one icon 114 (e.g. icon 114f) may result in a sub-menu of new icons (not shown) to appear in its place (e.g. in the case of icon 114f, a sub-menu relating to music choices may appear).

As previously mentioned, the system 300 may be configured to detect the presence of an interchangeable member 350, by way of the optical sensor 110 or otherwise. Figure 3D depicts an exemplar arrangement which provides this function. As shown therein, the interchangeable member 350 may further include a tab 355 configured to intersect with the sensing region 112 at a fixed position. The tab 355 may extend from the planar surface of the interchangeable member 350 at said fixed position. The optical sensor 110 may be configured to recognise this fixed position 112 and, upon detection of the tab 355 at this position, determine that an interchangeable member 350 has been received by the housing 330.

Different interchangeable members 350 may have tabs 355 which are unique to that interchangeable member 350 (within a given set of members 350). For example, the tabs 355 of different interchangeable members 350 may be differentiated in at least one of shape, size, or position. The optical sensor 110 may be configured to recognise these features of a given tab 335 and thus differentiate between different interchangeable members 350.

It will be appreciated that many other suitable arrangements exist by which the system 300 may detect the presence of an interchangeable member 350. For example, the system 300 may include a further (i.e. second) optical sensor (not shown) disposed within the slot 332 which is configured to detect the presence (or absence) of an interchangeable member 350 within the slot 332.

Figure 4 shows a diagram of some emitters 118 and receivers 119 of an exemplary optical sensor 110 that may be used in the control system 100 to define a sensing region 112 and detect an occluding object 402 therein.

The optical sensor 110 shown in Figure 4 includes a plurality of emitters 118 and receivers 119. The emitters 118 and receivers 119 are arranged in a row in an alternating manner. The row of alternating emitters 118 and receivers 119 thus defines the elongated configuration of the optical sensor 110, and thereby form the sensor bar 128.

The optical sensor 110 includes an infrared (IR) sensor. Therefore, the emitters 118 are configured to emit light in the infrared range and the receivers 119 are configured to receive and detect light in the infrared range. In this way, the optical sensor 110 may be less sensitive to background light in an indoor environment. However, the optical sensor 110 may further be configured to measure, and filter out, background infrared light.

The emitters 118 are each configured to project or emit an outgoing light signal 404 along the two-dimensional plane of the sensing region 112 (which may also be referred to as an "infrared plane"). The emitters 118 can thus define a grid or plane of emitted (infrared) light which is invisible to the human eye and forms the sensing region 112.

The receivers 119 are configured to receive reflected light signals 406 which include light from the outgoing light signals 404 having been reflected by an object 402 intersecting the two-dimensional plane within the sensing region 112.

When an occluding object 402, such as a finger, stylus, or similar, intersects the two-dimensional plane of the sensing region 112, it partially obstructs and reflects portions of the outgoing light signals 404 as reflected light signals 406. These reflected light signals 406 are received by one or more of the receivers 119. The optical sensor 110 can determine a location of the occluding object 402 based on the reflected light signals 406 received at the receivers 119.

For example, the receivers 119 may be configured to determine the intensity of reflected light signals 406 received at said receivers 119. A received reflected light signal 406 having a relatively greater intensity at a given receiver 406 may indicate that an occluding object 202, from which that reflected light signal 406 originated, is relatively closer to that receiver 119. Therefore, the optical sensor 110 may be configured to determine a distance between an occluding object 402 and a given receiver 402 based on the intensity of a light signal 406 which has been received at that receiver 119. In this way, the optical sensor 110 may determine a location of an occluding object 402 based on the relative intensities of the reflected light signals 406 received at one or more receivers 119.

When reflected light signals 406 from one occluding object 402 are received at more than one receiver 119, the optical sensor may determine angle of incidences of the reflected light signals 406 on those receivers 119 based on the relative intensities of the received reflected light signals 406. Thus, the optical sensor 110 may triangulate the position of the occluding object 402 to determine the location of the occluding object 402 in more than one dimension. For example, both the lateral and longitudinal position of the object 402, relative to the sensor 110 (i.e. relative to the emitters 118 and receivers 119 of said sensor 100) may be determined.

It will be appreciated that other appropriate methods of determining the location of an occluding object 402 may exist. For example, the optical sensor 110 may be configured to triangulate the position of an object based on time-of-flight calculations. For example, the receivers 119 may be configured to determine a time at which a reflected light signal 406 is received by a given receiver 119 and, based on a known time at which the corresponding signal 404 was emitted by one or more emitters 118, determine the distance of an occluding object from said emitter 118 and receiver 119.

Additionally, or alternatively, the receivers 119 may be configured to directly determine the angle of incidence of incoming reflected light signals 406. For example, the receivers 119 may include position sensitive sensors (PSDs), photodiode arrays, diffraction gratings, or polarisation-based sensing means.

Additionally, or alternatively, the receivers 119 may be configured to only receive light from certain angles of incidence, thus defining a limited field of view for each receiver 119. Multiple receivers 119 may triangulate the position of an object 402 based on which receivers 119 detect reflected light signals 406 from that object.

Such an example is illustrated in Figure 5 which shows the optical sensor 110 emitting light signals 404 in a direction perpendicular to the sensor bar 128. The receivers 119 are configured to detect light only from certain angles (as illustrated by the dashed lines). Thus, the receivers 119 may define a grid of detection points 131 throughout the sensing region. When objects 402 (e.g. objects A, B, and C) intersect with said detection points 131, the x coordinates and y coordinates of those objects 402 may be determined based on the receivers 119 which have received signals 406 reflected from said objects 402. The optical sensor 110 may also base this determination on the intensity of those received signals 406 as a distance between a receiver 119 and a reflecting object 402 may be determined from an intensity of a received signal 406.

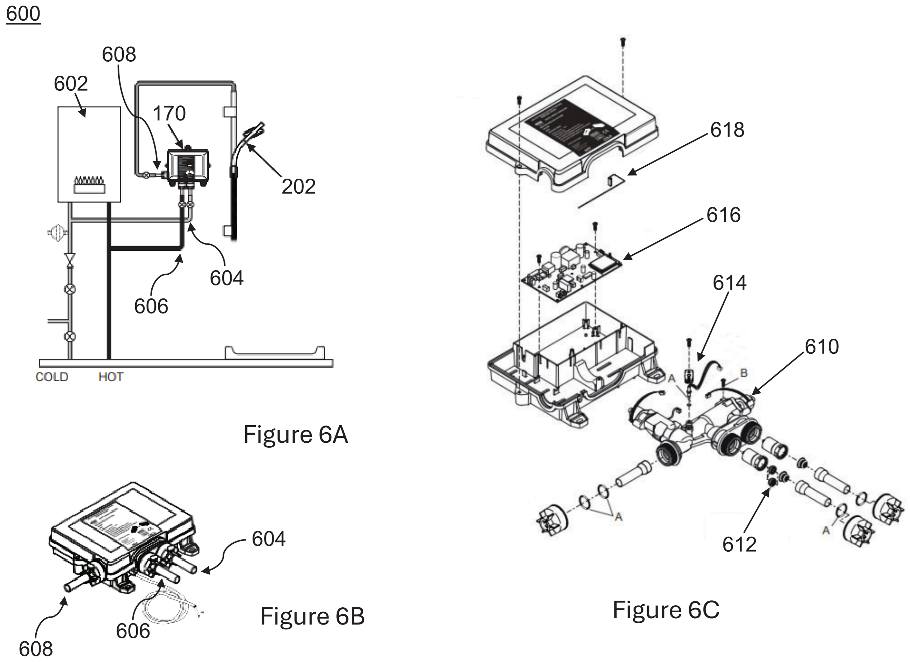

Figure 6A shows a schematic of a shower system 600 including an exemplar digital valve 170 and Figure 6B shows an isometric view of an exemplar digital valve 170 suitable for use with the systems 100, 300 of the present disclosure.

It will be understood that the digital valve 170 of Figure 6 is referred to by way of example only and the control systems 100, 300 may be configured to operate any other suitable digital valve 170 or, indeed, other electronic or digital devices 370, as previously mentioned.

Figure 6C shows an exploded view of the digital valve of Figure 6B illustrating components of the digital valve 170.

The digital valve 170 may include one or more fluid inlets (e.g. inlets 604, 606), a fluid outlet 608, and a mixing valve assembly 610 configured to mix the fluid flows from each of the inlets 604, 606 prior to the fluid flow(s) reaching the outlet 608. The inlet 604 may be fluidly connected to a source of cold water (e.g. a mains water supply) and the inlet 606 may be fluidly connected to a source of hot water (e.g. a boiler 602). Therefore, in selectively mixing the fluid flows through the inlets 604, 606, the mixing valve assembly 610 may control the temperature of a fluid which flows from the outlet 608. The mixing valve assembly 610 may further include a thermistor 614 or other temperature monitoring device configured to measure the temperature of fluid flowing through the outlet 608.

The digital valve 170 may include one or more electronically actuatable flow regulators (or "valves") 612 disposed in any, some, or all of the fluid paths at fluid inlets 604, 606, and fluid outlet 608. The digital valve 170 may thereby control a flow rate and/or pressure of fluid flow from the outlet 608.

The digital valve 170 may further include electronics 616 (e.g. a control PCB) configured to control electronically actuatable components of the digital valve 170 (e.g. the flow regulators 612 or mixing valve assembly 610).

In this way, the controller 140 of the systems 100, 300 may be provided by the electronics 616 (i.e. instead of a separate control PCB 124). The electronics 616 may be configured to communicate wirelessly with the optical sensor 110 via the aerial 618 or otherwise. Alternatively, the controller 140 of the systems 100, 300 may be the control PCB 124, which may communicate (via a wireless or wired connection) with the electronics 616 of the digital valve 170, as discussed above.

Selections (e.g. control operations) made by a user may be communicated as control signals 141 to the digital valve 170. Said control signal(s) 141 may cause the digital valve 170 to operate any of its components (e.g. the flow regulators 612 or mixing valve assembly 610), by way of the electronics 616 or otherwise, to control the flow of water out of the shower head 202 (such as a temperature or flow rate of said flow) according to a user selection.

It will be appreciated that the digital valve 170 may be configured to control the temperature and/or flow rate from a shower head 202 via a variety of suitable mechanisms. For example, the digital valve 170 may additionally or alternatively include one or more (e.g. electronically operated) actuators (not shown) disposed in the flow path(s) of fluid passing through said digital valve 170. The actuators may be configured to, upon receiving a relevant control signal 141 from the controller 140 (by way of the electronics 616 or otherwise), move to control a valve mechanism) of the digital valve 170. The actuator may open or close or otherwise adjust position of the valve mechanism, thus adjusting the flow rate of water moving along the flow path in which the actuator is disposed (e.g. a flow path through the inlets 604, 606).

The actuators may include one or more electro-mechanical actuators, which are operable to control a valve mechanism of the digital valve 170 by way of a stepper motor or servo. Additionally, or alternatively, the actuators may include a solenoid actuator configured to move a valve mechanism by way of electromagnetic force. Additionally, or alternatively, the actuators may include a piezoelectric, pneumatic, or hydraulic actuator. The valve mechanism may be part of the flow regulator 612, for example.

The flow regulators 612 and mixing valve assembly 610 may include one or more of said actuators.

Figures 7A to 8B each depict other possible implementations of the control system 100 described herein. It will be appreciated that the depicted appliances may also be controlled in the same way as described below via the system 300.

The system 100 may be configured for control of the flush mechanism of a toilet 700. The optical sensor 110 maybe mounted adjacent or directly to an external surface of the cistern 702 such that the active region 112 is defined across said surface. The controller 140 may be configured to communicate with the flush valve 770 (not shown) of the flush mechanism of a toilet 700. The flush valve may operate by way of any of the features described above in connection with the valve 170. For example, the flush valve may include one or more actuators.

As shown in Figure 7B, the optical sensor 110 of a control system 100 may be mounted to or adjacent the surface of a mirror 750. For example, the optical sensor 110 may be concealed within the frame of the mirror 750. The system 100 may control any suitable device 370 or valve 170, 770. Additionally, or alternatively, the system 100 may control functions of the mirror 750 itself. For example, the system 100 may control a light 752 of the mirror.

Additionally, or alternatively, the mirror 750 may include a cabinet 760 (not shown) the system 100 may control a lock 762 of the cabinet 760. The sub-region 113 which corresponds to control (i.e. a locking or unlocking function) of the lock 762 may not be indicated with an icon 114. Additionally, or alternatively, the locking or unlocking function of the lock 762 may correspond to a secret movement or sequence of movements to be performed by an object 402 within the sensing region 112.

Thus, the system 100 may provide 'hidden' buttons. This may increase the security of locked cabinets 760 which may be advantageous when storing medicines.

Additionally, or alternatively, the system 100 may be configured to control the faucet 810 of a sink 800. The optical sensor 110 might be mounted on or adjacent a surface of a cabinet 820 housing said sink 800 such that the sensing region 112 is defined across the front face of said cabinet 820, as depicted in Figure 8A. For example, the optical sensor 110 might be mounted to an overhanging lip of a countertop 830 of the cabinet 820. The controller 140 of the system 100 may be configured to communicate with a valve assembly 870 (not shown) of the faucet 810. The system 100 may control faucets 810 in kitchen, bathroom, or any other suitable environments.

Figure 8B depicts further examples of the system 100 in use in a bathroom environment. The optical sensor 110 might be mounted to a wall and the sensing region 112 defined across that wall adjacent the optical sensor 110. The optical sensor 110 may be mounted to the underside of a wall fixture such as a 750.

Additionally, or alternatively, the optical sensor 110 may be mounted atop a cabinet 860 and configured to project a sensing region 112 upwards from the surface of a cabinet.

Additionally, or alternatively, the optical sensor 110 might be mounted to the underside of a cabinet 860 or otherwise located such that the sensing region 112 may be defined across a portion of the floor. In such an example, the sensing region 112 may lie in a two-dimensional plane parallel to the floor. Therefore, the sensing region 112 may be defined remotely from the optical sensor 110.

Additionally, or alternatively, the sensing region 112 may be defined along a plane which extends between the optical sensor 110 and the floor. As demonstrated by this example, the sensing region 112 does not necessarily need to be associated with a parallel surface, such as the wall 213 of the shower enclosure 200 or the interchangeable member 350. These surfaces 213, 350 merely act as guides for a user. In the example where the sensing region 112 is defined along a plane which extends between the optical sensor 110 and the floor, icons 114 may be projected or otherwise indicated on the floor.

A sensing region 112 defined across the floor or along a plane, which intersects with the floor, may allow a user to actuate the optical sensor with their foot which may be more convenient for some users and may be a more hygienic arrangement.

While the foregoing is directed to examples of the disclosed control systems, it will be understood that the control systems disclosed herein are described purely by way of example, and modifications of detail can be made within the scope of the present disclosure.

## Claims

1. A control system, comprising:
an optical sensor configured to:
define at least one sensing region within a two-dimensional plane,
detect an object intersecting the two-dimensional plane in the at least one sensing region and determine a location of the object within the at least one sensing region, and
transmit an output signal upon detection of the object, wherein the output signal is based on the determined location of the object;
a controller configured to receive the output signal from the optical sensor and to transmit a control signal based on the received output signal; and
a digital valve configured to receive the control signal from the controller and to operate in response said received control signal.

2. The system of claim 1, wherein the optical sensor is arranged to be orientated adjacent a substantially planar surface such that the two-dimensional plane of the at least one sensing region is defined substantially parallel to the substantially planar surface,
optionally wherein the optical sensor is configured to be mounted to the substantially planar surface such that the at least one sensing region can be defined across the planar surface.

3. The system of either of claims 1 or 2, wherein the at least one sensing region comprises a plurality of sensing sub-regions, each sensing sub-region corresponding to a different output signal that is transmitted upon detection of an object therein,
optionally wherein each sensing sub-region is configured to align with an icon indicated on the substantially planar surface, each icon being indicative of a predetermined control signal that will be output by the controller to the digital valve upon detection of an object intersecting the two-dimensional plane in that sub-region.

4. The system of any preceding claim, wherein the optical sensor is further configured to detect one or more movements of the object while intersecting the two-dimensional plane within the sensing region, and wherein different sequences of movements correspond to different output signals.

5. The system of any preceding claim, wherein the optical sensor is located remotely from the digital valve.

6. The system of any preceding claim wherein the digital valve is operably coupled to at least one of: a toilet, a shower fixture and a faucet.

7. The system of any preceding claim, wherein the optical sensor is housed within a frame of a shower enclosure and oriented such that the sensing region is defined substantially parallel to a substantially planar surface of the shower enclosure; and
wherein the digital valve is operably coupled to a shower fixture within the shower enclosure and configured to control at least one of a temperature or a flow rate of fluid ejected from a shower head of the shower fixture.

8. The system of any of claims 1 to 6, wherein the optical sensor is disposed inside a housing having at least one aperture in alignment with the optical sensor to allow the sensing region to be defined externally of the housing,
optionally wherein the housing is configured to receive an interchangeable member having at least one substantially planar surface such that the at least one sensing region is defined across said substantially planar surface.

9. A system for controlling a digital device, comprising:
an optical sensor configured to:
define at least one sensing region within a two-dimensional plane,
detect an object intersecting the two-dimensional plane in the at least one sensing region and determine a location of the object within the at least one sensing region, and
transmit an output signal upon detection of the object, wherein the output signal is based on the determined location of the object; and
a controller configured to receive the output signal from the optical sensor and to transmit a control signal based on the received output signal,
wherein the optical sensor is disposed inside a housing having at least one aperture in alignment with the optical sensor to allow the at least one sensing region to be defined externally of the housing, the housing being configured to receive an interchangeable member having at least one substantially planar surface such that the at least one sensing region is defined across said substantially planar surface.

10. The system of claim 8 or 9, wherein the housing comprises a slot configured to receive the interchangeable member therein, and the optical sensor is configured to detect the presence of the interchangeable member within the slot.

11. The system of any of claims 8 to 10, wherein the controller is:
disposed within the housing; and/or
configured for wireless communication.

12. The system of any of claims 8 to 11, wherein the housing is configured as a standalone docking station.

13. The system of any preceding claim, wherein:
the optical sensor comprises an infrared (IR) sensor; and/or
the optical sensor is configured to transmit output signals only upon detection of an object intersecting the two-dimensional plane in the at least one sensing region

14. The system of any preceding claim, wherein the optical sensor comprises:
a plurality of emitters configured to emit an outgoing light signal along the two-dimensional plane; and
a plurality of detectors configured to receive a reflected light signal,
wherein the reflected light signal comprises light from the outgoing light signal reflected by an object intersecting the two-dimensional plane within the at least one sensing region, and the sensor is configured to determine, based on an angle of incidence of the reflected light signal on one of the plurality of light detectors, a location of the object in the sensing region.

15. The system of claim 14, wherein the emitters of the optical sensor are arranged to emit light across the two-dimensional plane.
